# EUROPEAN PATENT APPLICATION

(11) **EP 4 575 924 A1**
(43) Date of publication of application: **25.06.2025**
(21) Application number: 23383367.2
(22) Date of filing: 22.12.2023
(51) Int. Cl.: G06N 10/60, G06F 7/58, G06N 10/40

(54) **SYSTEM AND METHOD FOR OBTAINING RANDOM NUMBERS USING QUANTUM ANNEALER AND RELATED METHODS**

(71) Applicant: Multiverse Computing S.L., 20014 Donostia-San Sebastian (ES)
(72) Inventor: ORÚS, Roman, 20014 Donostia / San Sebastián (ES)
(74) Representative: Balder IP Law, S.L.

(57) **Abstract**

The system and method for generating random numbers involves a quantum device, a data input module, a quantum annealing device, a read out module, an error mitigation module, and an output module. The quantum device obtains random numbers. The data input module enters numerical data corresponding to magnetic fields to be applied to each quantum bit of the quantum device, a time parameter, and a state count to be sampled by the quantum device. The quantum annealing device implements a quantum evolution with a quantum operator consisting only of magnetic fields. The read out module measures the quantum bits at the end of the evolution. The error mitigation module minimizes the effect of a temperature parameter by fine-tuning the magnetic fields of the annealing. The output module measures the quantum bits after the whole procedure, and produces a random string of output bits.

## Description

### TECHNICAL FIELD

The invention pertains to a system and method for utilizing a quantum annealer in the field of quantum computing. It involves the use of various modules for input data entry, quantum annealing, readout, error mitigation, and output.

### BACKGROUND

Quantum annealing is a computational method that harnesses the power of quantum mechanics to solve complex problems more efficiently than classical computers. It is particularly useful in optimization problems, where the goal is to find the best solution among a set of possible solutions. One of the key components of a quantum annealing system is the qubit, the basic unit of quantum information. In a quantum annealing system, qubits are manipulated to represent the problem to be solved and then allowed to evolve according to the principles of quantum mechanics. The final state of the qubits represents the solution to the problem. However, the process of quantum annealing is not perfect and is subject to various sources of error, such as the effects of finite temperature and imperfect adiabatic evolution. These errors can affect the accuracy of the solution obtained from the quantum annealing process. Furthermore, the process of reading out the final state of the qubits can also introduce errors. Therefore, there is a need for methods to mitigate these errors and improve the accuracy of quantum annealing.

### SUMMARY

In a first aspect, in accordance with some embodiments, a system is provided for generating random numbers using a quantum device, the system comprising: a data input module for entering: a set of numerical data corresponding to magnetic fields to be applied to each quantum bit of the quantum device; a time parameter; and a state count to be sampled by the quantum device; the quantum device, configured to implement a quantum evolution with a quantum operator consisting only of magnetic fields; a read out module configured to measure the quantum bits after the quantum evolution; an error mitigation module configured to minimize an effect of a temperature parameter by fine-tuning the magnetic fields; and an output module configured to measure the quantum bits and produce a random string of classical output bits.

In some embodiments, the quantum device may be a quantum annealer.

In some embodiments, the numerical data may further comprise a set of numbers corresponding to local magnetic fields to be applied to each qubit of the quantum annealer, annealing time, and number of ground states to be sampled by the quantum annealer
In some embodiments, the quantum annealer may implement an imperfect adiabatic evolution with a Hamiltonian consisting only of local magnetic fields in a Z direction.

In some embodiments, the quantum annealer may be based on superconducting qubits.

In a second aspect, in accordance with some embodiments, a method is provided for generating random numbers, the method comprising: entering a set of numerical data corresponding to magnetic fields to be applied to each quantum bit of a quantum device, a time parameter, and a state count to be sampled by the quantum device using a data input module; implementing a quantum evolution with a quantum operator consisting only of magnetic fields using the quantum device;

measuring the quantum bits of the quantum device after implementing the quantum evolution using a read out module; fine-tuning the magnetic fields using an error mitigation module, thereby minimizing an effect of a temperature parameter; measuring the quantum bits after the fine-tuning to produce a random string of classical output bits using an output module.

In some embodiments, the quantum device may be a quantum annealer.

In some embodiments, the numerical data may include set of numbers corresponding to local magnetic fields to be applied to each qubit of the quantum annealer, annealing time, and a number of ground states to be sampled by the quantum annealer.

In some embodiments, the quantum annealer may implement an imperfect adiabatic evolution with a Hamiltonian consisting only of local magnetic fields in a Z direction.

In some embodiments, the quantum annealer may be based on superconducting qubits.

### LIST OF FIGURES

FIG. **1** illustrates, in a flowchart, operations for generating random numbers using a quantum annealer in accordance with certain embodiments.
FIG. **1A** illustrates, in a flowchart, operations for obtaining random numbers using a quantum device in accordance with certain embodiments.
FIG. **1B** illustrates, in a flowchart, operations for entering a set of numerical data for the quantum annealer in accordance with certain embodiments.
FIG. **1C** illustrates, in a flowchart, operations for implementing a quantum evolution with a quantum operator using a quantum annealing device in accordance with certain embodiments.
FIG. **1D** illustrates, in a flowchart, operations for minimizing the effect of a temperature parameter by fine-tuning the magnetic fields of the annealing in accordance with certain embodiments.
FIG. **1E** illustrates, in a flowchart, operations for measuring the quantum bits after the procedure and producing a random string of output bits in accordance with certain embodiments.
FIG. **2** illustrates, in a block diagram, the main components of a Quantum Annealing Random Number Generation System in accordance with certain embodiments.
FIG. **2A** illustrates, in a block diagram, the Quantum Evolution System within the Quantum Annealing Random Number Generation System in accordance with certain embodiments.
FIG. **2B** illustrates, in a block diagram, the Quantum Error Minimization System as a component of the Quantum Annealing Random Number Generation System in accordance with certain embodiments.
FIG. **2C** depicts, in a block diagram, the Quantum Cybersecurity System as a part of the Quantum Annealing Random Number Generation System in accordance with certain embodiments.

### DETAILED DESCRIPTION

Various embodiments in accordance with the teachings herein will be described below to provide an example of at least one embodiment of the claimed subject matter. No embodiment described herein limits any claimed subject matter. The claimed subject matter is not limited to devices, systems, or methods having all of the features of any one of the devices, systems, or methods described below or to features common to multiple or all of the devices, systems, or methods described herein. It is possible that there may be a device, system, or method described herein that is not an embodiment of any claimed subject matter. Any subject matter that is described herein that is not claimed in this document may be the subject matter of another protective instrument, for example, a continuing patent application, and the applicants, inventors, or owners do not intend to abandon, disclaim, or dedicate to the public any such subject matter by its disclosure in this document.

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures, and components have not been described in detail so as not to obscure the embodiments described herein. Also, the description is not to be considered as limiting the scope of the embodiments described herein.

It should also be noted that the terms "coupled" or "coupling" as used herein can have several different meanings depending in the context in which these terms are used. For example, the terms coupled or coupling can have a mechanical or electrical connotation. For example, as used herein, the terms coupled or coupling can indicate that two elements or devices can be directly connected to one another or connected to one another through one or more intermediate elements or devices via an electrical signal, electrical connection, or a mechanical element depending on the particular context.

It should also be noted that, as used herein, the wording "and/or" is intended to represent an inclusive-or. That is, "X and/or Y" is intended to mean X or Y or both, for example. As a further example, "X, Y, and/or Z" is intended to mean X or Y or Z or any combination thereof.

It should be noted that terms of degree such as "substantially", "about" and "approximately" as used herein mean a reasonable amount of deviation of the modified term such that the end result is not significantly changed. These terms of degree may also be construed as including a deviation of the modified term, such as by 1%, 2%, 5%, or 10%, for example, if this deviation does not negate the meaning of the term it modifies.

Furthermore, the recitation of numerical ranges by endpoints herein includes all numbers and fractions subsumed within that range (e.g., 1 to 5 includes 1, 1.5, 2, 2.75, 3, 3.90, 4, and 5). It is also to be understood that all numbers and fractions thereof are presumed to be modified by the term "about" which means a variation of up to a certain amount of the number to which reference is being made if the end result is not significantly changed, such as 1%, 2%, 5%, or 10%, for example.

It should also be noted that the use of the term "window" in conjunction with describing the operation of any system or method described herein is meant to be understood as describing a user interface for performing initialization, configuration, or other user operations.

The example embodiments of the devices, systems, or methods described in accordance with the teachings herein may be implemented as a combination of hardware and software. For example, the embodiments described herein may be implemented, at least in part, by using one or more computer programs, executing on one or more programmable devices comprising at least one processing element and at least one storage element (i.e., at least one volatile memory element and at least one non-volatile memory element). The hardware may comprise input devices including at least one of a touch screen, a keyboard, a mouse, buttons, keys, sliders, and the like, as well as one or more of a display, a printer, and the like depending on the implementation of the hardware.

It should also be noted that there may be some elements that are used to implement at least part of the embodiments described herein that may be implemented via software that is written in a high-level procedural language such as object oriented programming. The program code may be written in C⁺⁺, C#, JavaScript, Python, or any other suitable programming language and may comprise modules or classes, as is known to those skilled in object-oriented programming. Alternatively, or in addition thereto, some of these elements implemented via software may be written in assembly language, machine language, or firmware as needed. In either case, the language may be a compiled or interpreted language.

At least some of these software programs may be stored on a computer readable medium such as, but not limited to, a ROM, a magnetic disk, an optical disc, a USB key, and the like that is readable by a device having a processor, an operating system, and the associated hardware and software that is necessary to implement the functionality of at least one of the embodiments described herein. The software program code, when read by the device, configures the device to operate in a new, specific, and predefined manner (e.g., as a specific-purpose computer) in order to perform at least one of the methods described herein.

At least some of the programs associated with the devices, systems, and methods of the embodiments described herein may be capable of being distributed in a computer program product comprising a computer readable medium that bears computer usable instructions, such as program code, for one or more processing units. The medium may be provided in various forms, including non-transitory forms such as, but not limited to, one or more diskettes, compact disks, tapes, chips, and magnetic and electronic storage. In alternative embodiments, the medium may be transitory in nature such as, but not limited to, wire-line transmissions, satellite transmissions, internet transmissions (e.g., downloads), media, digital and analog signals, and the like. The computer useable instructions may also be in various formats, including compiled and non-compiled code.

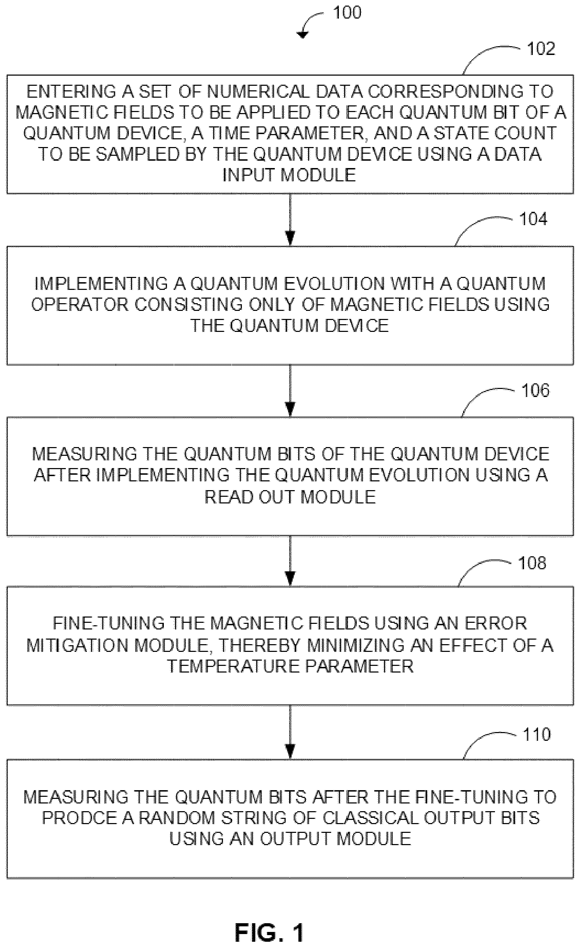

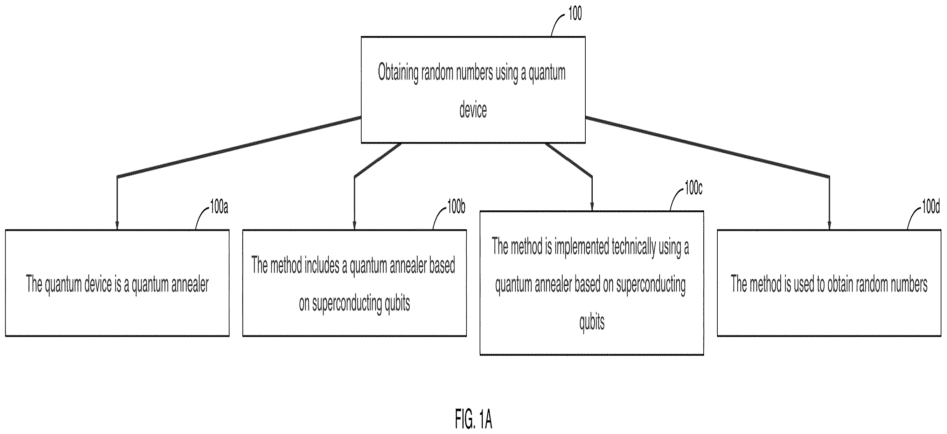

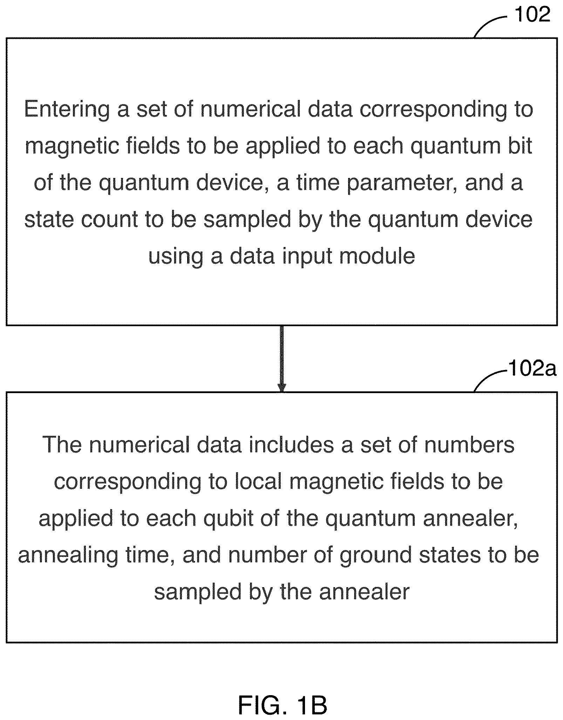

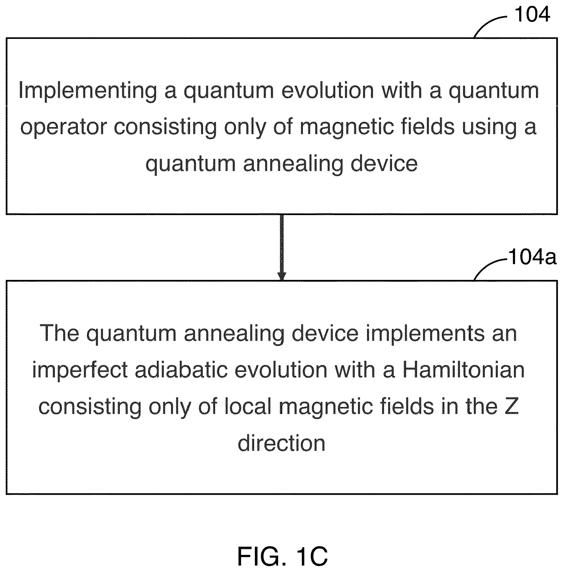

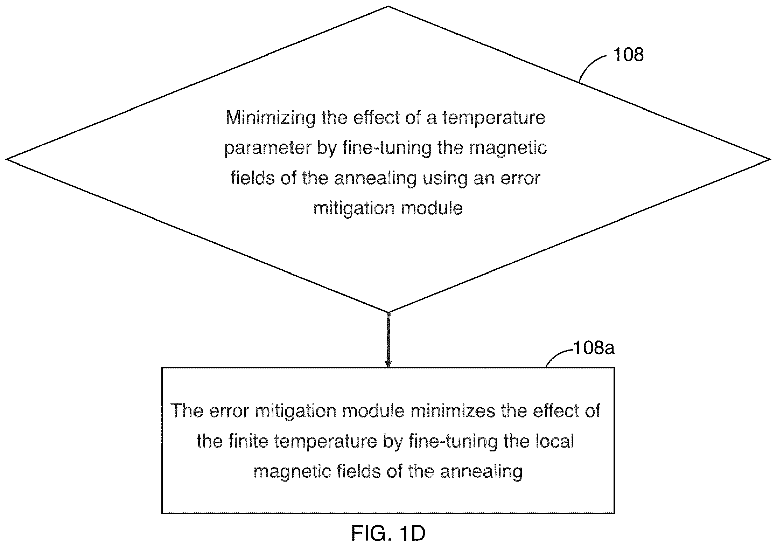

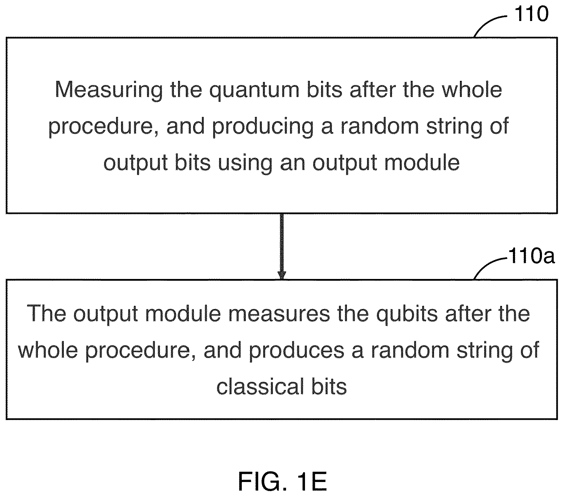

Referring first to FIGS. 1 and 1A, method 100 and its sub-steps involve the process of generating random numbers using a quantum device, specifically a quantum annealer. This process is a part of quantum computing and is used in various applications such as cryptography and simulations.

The quantum device, a quantum annealer, is a type of quantum computer that uses quantum bits, or qubits, to generate random numbers. Qubits are the basic units of quantum information, and unlike classical bits, they can exist in a state of superposition, being both 0 and 1 at the same time. This property allows quantum computers to perform complex calculations much faster than classical computers.

The process of generating random numbers involves the quantum annealer implementing an imperfect adiabatic evolution with a Hamiltonian consisting only of local magnetic fields in the Z direction (Step 100a). The Hamiltonian is a mathematical construct used in quantum mechanics to describe the total energy of a system. In this case, it consists only of local magnetic fields, which are used to manipulate the states of the qubits.

The quantum annealer is based on superconducting qubits (Step 100b). Superconducting qubits are a type of artificial atom made out of superconducting materials, which can carry an electric current without resistance. These qubits are manipulated using microwave pulses to create a superposition of states, which is then collapsed into a single state when measured, producing a random number.

The method is technically implemented using a quantum annealer based on superconducting qubits (Step 100c). This means that the physical device used to perform the method is a quantum computer based on superconducting technology. This technology allows for faster and more efficient quantum computations, making it ideal for generating random numbers.

Finally, the system is used to generate random numbers (Step 100d). This is the primary purpose of the system and the method it implements. The random numbers generated by the quantum annealer can be used in various applications, such as cryptography, where they can be used to create secure encryption keys.

Referring next to FIGS. 1 and 1B, step 102 and its sub-step involve the process of entering a set of numerical data using a data input module. This data is necessary for the operation of the quantum annealer and the generation of random numbers.

The data input module is a component of the system that allows for the entry of specific numerical data. This data includes a set of numbers corresponding to magnetic fields to be applied to each quantum bit of the quantum device, a time parameter, and a state count to be sampled by the quantum device.

The set of numbers corresponding to magnetic fields (Step 102-a) is part of the data. These numbers determine the local magnetic fields to be applied to each qubit of the quantum annealer. The magnetic fields influence the states of the qubits and thus the outcome of the quantum computation.

The time parameter is another piece of data. It determines the annealing time, which is the duration of the quantum computation. The length of the annealing time can influence the quality of the random numbers generated.

The state count to be sampled by the quantum device is the number of ground states to be sampled by the annealer. The ground state of a quantum system is its lowest energy state, and sampling these states is a method in quantum computation for finding the solution to a problem.

The data input module enters this data into the system, setting the parameters for the quantum computation. This action is necessary for the system to generate random numbers using the quantum annealer. The data input module thus plays a role in the operation of the system and the implementation of the method.

Referring next to FIGS. 1 and 1C, step 104 and its sub-step involve the process of implementing a quantum evolution with a quantum operator consisting only of magnetic fields using a quantum annealing device. This is part of the process of generating random numbers using a quantum annealer.

The quantum annealing device is a type of quantum computer that uses quantum bits, or qubits, to perform computations. The computation is a quantum evolution, which is a change in the state of a quantum system over time. The quantum evolution is implemented with a quantum operator, a mathematical construct used in quantum mechanics to describe changes in a quantum system.

The quantum operator used consists only of magnetic fields (Step 104-a). This means that the changes in the quantum system are caused by the influence of magnetic fields. These magnetic fields are applied to the qubits in the quantum annealer, causing them to change state.

The quantum evolution is an imperfect adiabatic evolution. An adiabatic evolution is a quantum evolution in which the quantum system remains in its ground state, or lowest energy state, throughout the evolution. In this case, the evolution is imperfect, indicating that the system may not remain in its ground state at all times.

The Hamiltonian, a mathematical construct used in quantum mechanics to describe the total energy of a system, consists only of local magnetic fields in the Z direction. This means that the energy of the system is determined by the local magnetic fields, and these fields are oriented in the Z direction.

The quantum annealing device implements this quantum evolution, causing the qubits to change state and thus generating random numbers. This is part of the operation of the quantum annealer and the method of generating random numbers.

Referring back to FIG. 1, step 106 involves the process of measuring the quantum bits at the end of the evolution using a read out module. This is part of the process of generating random numbers using a quantum annealer.

The read out module is a component of the system that measures the state of the qubits at the end of the quantum evolution. The state of a qubit is a piece of information in quantum computing, and measuring this state is how the results of a quantum computation are obtained.

The process of measuring a qubit involves interacting with the qubit in a way that it is forced to "choose" between its possible states. This is done by sending a pulse of energy to the qubit and then measuring the resulting state. The state of the qubit at the end of the quantum evolution is a random number, which is the output of the quantum annealer.

The read out module measures the state of each qubit individually, and the combined states of all the qubits form a string of random numbers. This string of random numbers is the output of the quantum annealer and can be used in various applications, such as cryptography.

The action of the read out module is necessary for the operation of the quantum annealer and the method of generating random numbers. Without this action, the results of the quantum evolution would not be accessible, and the quantum annealer would not be able to generate random numbers. The read out module is part of the operation of the system and the implementation of the method.

Referring next to FIGS. 1 and 1D, step 108 and its sub-step involve the process of minimizing the effect of a temperature parameter by fine-tuning the magnetic fields of the annealing using an error mitigation module. This is part of the process of generating random numbers using a quantum annealer.

The error mitigation module is a component of the system that minimizes the effect of temperature on the quantum annealing process. Temperature is a parameter in quantum annealing because it can cause the qubits to change state randomly, which can lead to errors in the generated random numbers.

The error mitigation module minimizes the effect of temperature by fine-tuning the magnetic fields of the annealing (Step 108-a). The magnetic fields are used to manipulate the states of the qubits, and by adjusting these fields, the error mitigation module can reduce the likelihood of the qubits changing state due to temperature.

The process of minimizing the effect of temperature is a technique in quantum computing. It is used to improve the accuracy of quantum computations and to ensure that the results of the computations are reliable.

The action of the error mitigation module is necessary for the operation of the quantum annealer and the method of generating random numbers. Without this action, the effect of temperature could cause errors in the generated random numbers. The error mitigation module is part of the operation of the system and the implementation of the method.

Referring next to FIGS. 1 and 1E, step 110 and its sub-step involve the process of measuring the quantum bits after the whole procedure, and producing a random string of output bits using an output module. This is the final step in the process of generating random numbers using a quantum annealer.

The output module is a component of the system that measures the state of the qubits after the quantum evolution and produces a random string of output bits. The state of a qubit is a piece of information in quantum computing, and measuring this state is how the results of a quantum computation are obtained.

The process of measuring a qubit involves interacting with the qubit in a way that it is forced to "choose" between its possible states. This is done by sending a pulse of energy to the qubit and then measuring the resulting state. The state of the qubit after the whole procedure is a random number.

The output module measures the state of each qubit individually, and the combined states of all the qubits form a string of random numbers (Step 110-a). This string of random numbers is the output of the quantum annealer and can be used in various applications, such as cryptography.

The action of the output module is necessary for the operation of the quantum annealer and the method of generating random numbers. Without this action, the results of the quantum evolution would not be accessible, and the quantum annealer would not be able to generate random numbers. The output module is part of the operation of the system and the implementation of the method.

The method, which involves generating random numbers using a quantum annealer, has applications in various fields, including cybersecurity and encryption. In cybersecurity, random numbers are used to create encryption keys that secure data. The randomness of the keys, and thus the quality of the random numbers generated by the quantum annealer, is a factor in the strength of the encryption.

In encryption, random numbers are used in different ways, such as in the generation of keys for symmetric and asymmetric encryption algorithms, in the creation of random nonces used in cryptographic protocols, and in the generation of random padding in certain encryption modes.

The action of the method having applications in cybersecurity and encryption is a result of the properties of the random numbers generated by the quantum annealer. These random numbers are truly random, unlike the pseudo-random numbers generated by classical computers, and thus they provide a level of security in cryptographic applications.

The action of the method having applications in cybersecurity and encryption is a practical reality. Quantum annealers are being used in research and development to improve the security of cryptographic systems, and they are expected to play a role in cybersecurity and encryption in the future.

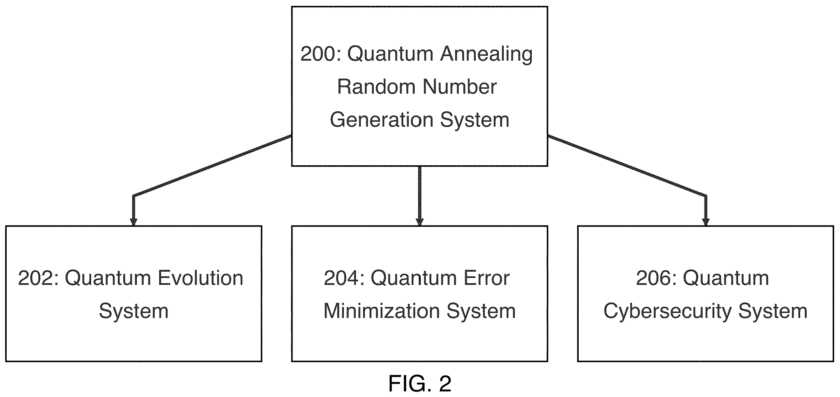

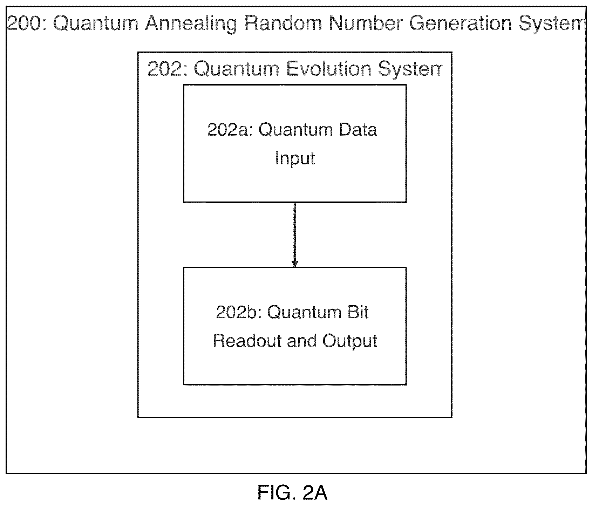

Referring to FIG. 2A, the Quantum Annealing Random Number Generation System, denoted as Component 200, is designed to generate random numbers, a function that finds use in many applications, particularly in the field of cybersecurity and encryption.

The system is composed of several parts. The Quantum Evolution System, or Component 202, includes a quantum device, which could be a quantum annealer or a quantum annealing device. This device is used to generate random numbers. The quantum annealing device carries out an imperfect adiabatic evolution with a Hamiltonian. In some cases, the quantum annealer is based on superconducting qubits.

Component 202 also includes two sub-components. Sub-component 202-a, the Quantum Data Input, is where the data input module operates. This module enters a set of numbers corresponding to local magnetic fields to be applied to each qubit of the quantum annealer, annealing time, and number of ground states to be sampled by the annealer.

Sub-component 202-b, the Quantum Bit Readout and Output, involves the read out module and the output module. The read out module measures the qubits at the end of the evolution, while the output module measures the qubits after the whole procedure and produces a random string of classical bits.

The Quantum Annealing Random Number Generation System operates through a series of interconnected processes. At the core of the system is the Quantum Evolution System, which houses a quantum device. This device is tasked with the generation of random numbers. The quantum annealing device carries out an imperfect adiabatic evolution with a Hamiltonian.

Within Component 202, there are two sub-components that play a role in the operation of the system. Sub-component 202-a, known as the Quantum Data Input, is where the data input module operates. This module inputs a set of numbers that correspond to local magnetic fields to be applied to each qubit of the quantum annealer, the annealing time, and the number of ground states to be sampled by the annealer.

Sub-component 202-b, the Quantum Bit Readout and Output, involves the read out module and the output module. The read out module measures the qubits at the end of the evolution. Following this, the output module measures the qubits after the entire procedure and produces a random string of classical bits.

Together, these components and sub-components form the Quantum Annealing Random Number Generation System. The system operates by setting the parameters for the quantum evolution, carrying out the evolution, and then reading out and converting the resulting quantum state into a string of random numbers. This process is carried out with precision and accuracy, ensuring the generation of random numbers.

The Quantum Evolution System, denoted as Component 202, is part of the Quantum Annealing Random Number Generation System. It is responsible for generating random numbers, a function that finds use in many applications, particularly in the field of cybersecurity and encryption.

Component 202 includes a quantum device, which could be a quantum annealer or a quantum annealing device. This device generates random numbers. The quantum annealing device carries out an imperfect adiabatic evolution with a Hamiltonian. In some cases, the quantum annealer is based on superconducting qubits.

The Quantum Evolution System operates through a series of interconnected processes. At the core of the system is a quantum device. This device generates random numbers. The quantum annealing device carries out an imperfect adiabatic evolution with a Hamiltonian.

Within Component 202, there are two sub-components that play a role in the operation of the system. Sub-component 202-a, known as the Quantum Data Input, is where the data input module operates. This module inputs a set of numbers that correspond to local magnetic fields to be applied to each qubit of the quantum annealer, the annealing time, and the number of ground states to be sampled by the annealer.

Sub-component 202-b, the Quantum Bit Readout and Output, involves the read out module and the output module. The read out module measures the qubits at the end of the evolution. Following this, the output module measures the qubits after the entire procedure and produces a random string of classical bits.

Together, these components and sub-components form the Quantum Evolution System. The system operates by setting the parameters for the quantum evolution, carrying out the evolution, and then reading out and converting the resulting quantum state into a string of random numbers.

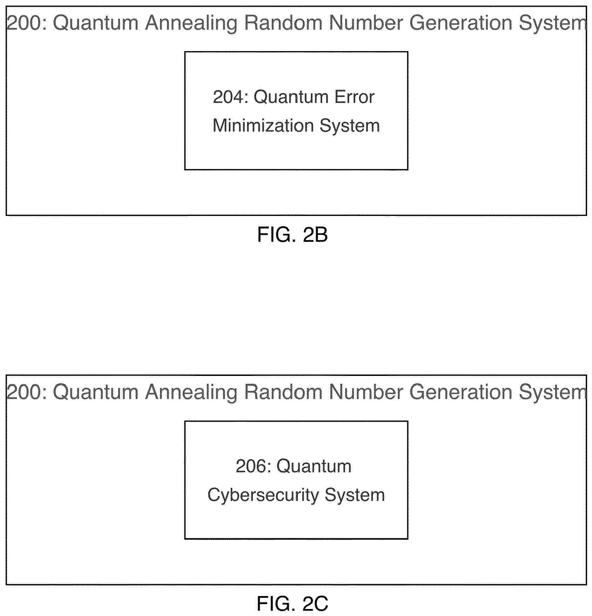

Referring next to FIG. 2B, the Quantum Error Minimization System, denoted as Component 204, is part of the Quantum Annealing Random Number Generation System. It plays a role in ensuring the accuracy of the quantum annealing process, which is essential for the generation of random numbers.

Component 204 includes an error mitigation module. This module minimizes the effect of a temperature parameter by fine-tuning the magnetic fields of the annealing. This fine-tuning process is a key aspect of the quantum annealing process, as it helps to reduce the potential for errors and enhances the accuracy of the random number generation.

The Quantum Error Minimization System operates by minimizing the effect of a temperature parameter. This is achieved by the error mitigation module, which fine-tunes the magnetic fields of the annealing. This fine-tuning process is carried out to reduce the potential for errors during the quantum annealing process, thereby enhancing the accuracy of the random number generation. This process is carried out with precision, ensuring the generation of random numbers.

Referring next to FIG. 2C, the Quantum Cybersecurity System, denoted as Component 206, is part of the Quantum Annealing Random Number Generation System. It plays a role in the application of the system in the field of cybersecurity and encryption.

Component 206 includes cybersecurity and encryption applications. These applications are used in the generation of random numbers, a function that is essential for many cybersecurity and encryption processes. The generation of random numbers is a key aspect of many cryptographic algorithms, providing the unpredictability necessary for secure encryption.

The Quantum Cybersecurity System operates by using the random numbers generated by the Quantum Annealing Random Number Generation System in cybersecurity and encryption applications. This is achieved by the cybersecurity and encryption applications, which use the random numbers in cryptographic algorithms. This use of random numbers provides the unpredictability necessary for secure encryption. This process is carried out with precision, ensuring the secure encryption of data.

While the applicant's teachings described herein are in conjunction with various embodiments for illustrative purposes, it is not intended that the applicant's teachings be limited to such embodiments as the embodiments described herein are intended to be examples. On the contrary, the applicant's teachings described and illustrated herein encompass various alternatives, modifications, and equivalents, without departing from the embodiments described herein, the general scope of which is defined in the appended claims.

## Claims

1. A system for generating random numbers using a quantum device, comprising:
a data input module for entering:
a set of numerical data corresponding to magnetic fields to be applied to each quantum bit of the quantum device;
a time parameter; and
a state count to be sampled by the quantum device;
the quantum device, configured to implement a quantum evolution with a quantum operator consisting only of magnetic fields;
a read out module configured to measure the quantum bits after the quantum evolution;
an error mitigation module configured to minimize an effect of a temperature parameter by fine-tuning the magnetic fields; and
an output module configured to measure the quantum bits and produce a random string of classical output bits.

2. The system of claim 1, wherein the quantum device is a quantum annealer.

3. The system of claim 2, wherein the numerical data further comprises a set of numbers corresponding to local magnetic fields to be applied to each qubit of the quantum annealer, annealing time, and number of ground states to be sampled by the quantum annealer.

4. The system of claim 2, wherein the quantum annealer implements an imperfect adiabatic evolution with a Hamiltonian consisting only of local magnetic fields in a Z direction.

5. A method for generating random numbers, comprising:
entering a set of numerical data corresponding to magnetic fields to be applied to each quantum bit of a quantum device, a time parameter, and a state count to be sampled by the quantum device using a data input module;
implementing a quantum evolution with a quantum operator consisting only of magnetic fields using the quantum device;
measuring the quantum bits of the quantum device after implementing the quantum evolution using a read out module;
fine-tuning the magnetic fields using an error mitigation module, thereby minimizing an effect of a temperature parameter;
measuring the quantum bits after the fine-tuning to produce a random string of classical output bits using an output module.

6. The method of claim 5, wherein the quantum device is a quantum annealer.

7. The method of claim 6, wherein the numerical data includes a set of numbers corresponding to local magnetic fields to be applied to each qubit of the quantum annealer, annealing time, and a number of ground states to be sampled by the quantum annealer.

8. The method of claim 6, wherein the quantum annealer implements an imperfect adiabatic evolution with a Hamiltonian consisting only of local magnetic fields in a Z direction.

9. The system of claim 2, wherein the quantum annealer is based on superconducting qubits.

10. The method of claim 6, wherein the quantum annealer is based on superconducting qubits.
